# EUROPEAN PATENT SPECIFICATION

(11) **EP 4 441 805 B1**
(45) Date of publication and mention of the grant of the patent: **25.02.2026**
(21) Application number: 22822903.5
(22) Date of filing: 25.11.2022
(51) Int. Cl.: H01M 4/04, H01M 4/13, H01M 4/139, H01M 4/62, H01M 10/052, H01M 4/02

(54) **TFE-BASED FLUOROPOLYMERS WITH OUTSTANDING METAL-ADHESION PROPERTIES**
FLUORPOLYMERE AUF TFE-BASIS MIT HERVORRAGENDEN METALLHAFTUNGSEIGENSCHAFTEN
FLUOROPOLYMÈRES À BASE DE TFE AYANT DES PROPRIÉTÉS EXCEPTIONNELLES D'ADHÉSION AUX MÉTAUX

(30) Priority: 29.11.2021 EP 21211097
(43) Date of publication of application: 09.10.2024
(73) Proprietor: Syensqo Specialty Polymers Italy S.p.A., 20021 Bollate (MI) (IT)
(72) Inventor: MILLEFANTI, Stefano, 21049 Tradate (VA) (IT); MARRANI, Alessio, 23900 Lecco (IT)
(74) Representative: Banfi, Gaia
(86) International application number: PCT/EP2022/083346
(87) International publication number: WO 2023/094622

(56) References cited:
- EP-A1- 3 863 081
- US-A1- 2011 059 340
- US-A1- 2017 256 367
- WANG XIAO ET AL: "Highly Elastic Block Copolymer Binders for Silicon Anodes in Lithium-Ion Batteries", APPLIED MATERIALS & INTERFACES, vol. 12, no. 34, 6 August 2020 (2020-08-06), US, pages 38132 - 38139, XP055920815, ISSN: 1944-8244, DOI: 10.1021/acsami.0c10005

## Description

### Cross-reference to related applications

This application claims priority to European patent application number 21211097.7 filed on 29 November 2021.

### Technical Field

The present invention relates to VDF-based fluoropolymers with outstanding metal-adhesion properties for use as a binding agent for electrodes for batteries.

### Background Art

To date, the electrodes of a lithium secondary battery are mainly manufactured by a wet process that comprises preparing a slurry in which an electrode active material, additives and a binder are dispersed in a solvent or an aqueous medium, and processing the slurry in a way that forms an electrode film.

Copolymers of vinylidene fluoride (VDF) and tetrafluoroethylene (TFE) in which a proportion of VDF is from 50 to 80 % by mole are known for use as binders for the preparation of electrodes for secondary batteries by a wet process. EP 0964464 for example discloses the use of VDF/TFE copolymers comprising at least 60% by moles of recurring units derived from VDF in the preparation of an electrode-forming slurry compositions comprising the active material and an organic solvent, such as NMP; said electrode-forming slurry compositions are coated onto a metal foil to prepare the electrodes.

Dry electrode processes have been developed to reduce the time-consuming and costly drying procedures required by the aforementioned wet processes.

Typical dry processes use the fibrillation properties of certain polymers to provide a matrix for embedded conductive material. Some of the polymers in the family of fluoropolymers, such as polytetrafluoroethylene (PTFE), are particularly inert and stable in the common electrolyte solvents used in secondary batteries, even those using organic solvent at high working or storage temperatures.

For example, dry electrode preparation processes can include combining a PTFE binder with active electrode material in powder form, and calendering to form an electrode film.

However, although PTFE has good cohesion with the electrode active material and can form free-standing films of PTFE binder with active electrode material, it has difficulty in adhesiveness to the current collector.

The applicant has surprisingly found that certain VDF-based fluoropolymers show improved adhesion to metals with respect to PTFE, having at the same time a good processability which make them suitable for the preparation of electrodes by dry processes or extrusion at low temperatures, thus providing electrodes by a very efficient process.

### Summary of invention

It is thus hereby provided a binder composition [binder (B)] for use in the preparation of electrodes for electrochemical devices, characterized by comprising a VDF-based copolymer [polymer (A)] that comprises:
- recurring units derived from vinylidene fluoride (VDF), and
- recurring units derived from tetrafluoroethylene (TFE),
wherein polymer (A) has at least two melting points, one melting point lower than 220 °C and one melting point higher than 250 °C.

In another aspect the present invention provides an electrode-forming composition [composition (C)] for use in the preparation of electrodes for electrochemical devices, characterized by comprising:
a) at least one electrode active material (AM);
b) a binder (B) as above defined; and
c) optionally, at least one conductive agent.

The applicant has surprisingly found that the processability of the binder (B) make it suitable for the preparation of electrodes by dry processes or extrusion at low temperatures, thus providing electrodes by a very efficient process.

In another aspect the present invention thus provides a process for manufacturing an electrode [electrode (E)] for electrochemical cell, said process comprising:
- A) providing a VDF-based copolymer [polymer (A)] as above defined;
- B) dry mixing the at least one electrode active material (AM), the polymer (A) as above defined, and optionally, at least one conductive agent in the absence of solvent to provide a dry electrode forming composition [composition (C)];
- C) feeding the composition (C) obtained in step B) to a compactor to form a self-supporting dry film; and
- D) applying the dry film to an electrically conductive substrate to form the electrode.

In another aspect, the present invention provides an electrode (E) for a secondary battery obtainable by the process as above defined.

In a further aspect, the present invention relates to an electrochemical device, such as a secondary battery or a capacitor, comprising at least one electrode (E) as defined above.

### Description of embodiments

In the context of the present invention, the term "weight percent" (wt %) indicates the content of a specific component in a mixture, calculated as the ratio between the weight of the component and the total weight of the mixture. When referred to the recurring units derived from a certain monomer in a polymer/copolymer, weight percent (wt %) indicates the ratio between the weight of the recurring units of such monomer over the total weight of the polymer/copolymer. When referred to the total solid content of a liquid composition, weight percent (wt %) indicates the ratio between the weight of all non-volatile ingredients in the liquid.

As used herein, the terms "adheres" and "adhesion" indicate that two layers are permanently attached to each other via their surfaces of contact.

By the term "electrochemical device", it is hereby intended to denote an electrochemical cell/assembly comprising a positive electrode, a negative electrode and a liquid electrolyte, wherein a monolayer or multilayer separator is in contact to at least one surface of one of the said electrodes. Non-limitative examples of suitable electrochemical devices include, notably, secondary batteries, especially, alkaline or an alkaline- earth secondary batteries such as lithium ion batteries, lead-acid batteries, and capacitors, especially lithium ion-based capacitors and electric double layer capacitors (supercapacitors).Non-limitative examples of electrochemical cells include, notably, batteries, preferably secondary batteries, and electric double layer capacitors.

For the purpose of the present invention, by "secondary battery" it is intended to denote a rechargeable battery. Non-limitative examples of secondary batteries include, notably, alkaline or alkaline-earth secondary batteries.

Each of the polymers (A) described herein has at least one melting temperature that is lower than 220°C, preferably lower than 180 °C and one melting temperature that is higher than 250 °C, even higher than 300 °C.

The Applicant has surprisingly found that when at least one melting point of polymer (A) is below 220 °C, even if at least another higher melting point is present (higher than 250 °C, or even higher than 300 °C), the polymer shows high adhesion to metal, and thus it is suitable for use as binder for preparing electrodes having high adhesion to the metal current collector.

The melting temperatures of polymer (A) may be determined from a DSC curve obtained by differential scanning calorimetry (hereinafter, also referred to as DSC).

Polymer (A) is preferably a semi-crystalline fluororesin.

The term "semi-crystalline" is hereby intended to denote a polymer (A) comprising at least one crystallizable part and at least one amorphous part in the backbone and exhibiting at least a first-order reversible phase change temperature, such as a melting point (solid-liquid transition).

Polymer (A) is preferably a semi-crystalline fluororesin having multiple endothermic peaks, the heat of fusion for the lower endothermic peak being of at least 1 J/g.

Additionally, the polymers (A) contain at least about 5 mol % VDF monomer.

The polymers (A) may optionally contain at least one other monomer. Suitable comonomers that may be included in the polymer (A) include, but are not limited to, ethylene, propylene, isobutylene, fluorinated comonomers such as chlorotrifluoroethylene (CTFE), hexafluoropropylene (HFP), fluorodioxoles, fluorodioxalanes, perfluoroalkyl ethylene monomers (e.g. perfluorobutylethylene (PFBE), perfluorohexylethylene (PFHE) and perfluorooctylethylene (PFOE)), and a perfluoroalkyl vinyl ether monomer (e.g., perfluoro(methyl vinyl ether) (PMVE), perfluoro(ethyl vinyl ether) (PEVE), and perfluoro(propyl vinyl ether) (PPVE)). The optional comonomer(s) may be present in the polymers (A) in an amount from about 0.001 mol % to about 10 mol %, from about 0.01 mol % to about 7 mol %, or from about 0.1 mol % to about 5 mol %.

According to other embodiments, polymer (A) consists essentially of recurring units derived from VDF and TFE.

Determination of the amount of VDF and TFE monomer recurring units in polymer (A) can be performed by any suitable method. Mention can be notably made of NMR methods.

Polymer (A) may still comprise other moieties such as defects, end-groups and the like, which do not affect nor impair its physico-chemical properties.

The polymer (A) may be obtained by polymerization of a VDF monomer,TFE and optionally of an additional comonomer as above defined either in suspension in organic medium, or in aqueous emulsion, according to the procedures known in literature.

The procedure for preparing the polymer (A) comprises polymerizing in an aqueous medium in the presence of a radical initiator the VDF, TFE and optionally of an additional comonomer as above defined, optionally in the presence of a chain transfer agent and of a dispersing agent in a reaction vessel.

Generally, the process of the invention is carried out at a temperature of at least 40°C, preferably of at least 50°C, more preferably of at least 60°C.

When the polymerization is carried out in suspension, polymer (A) is typically provided in form of powder.

When the polymerization to obtain polymer (A) is carried out in emulsion, polymer (A) is typically provided in the form of an aqueous dispersion (D), which may be used as directly obtained by the emulsion polymerization or after a concentration step. Preferably, the solid content of polymer (A) in dispersion (D) is in the range comprised between 10 and 50% by weight.

Polymer (A) obtained by emulsion polymerization can be isolated from the aqueous dispersion (D) by concentration and/or coagulation of the dispersion and obtained in powder form by subsequent drying.

The polymer (A) of the invention is preferably obtainable by emulsion polymerization in an aqueous polymerization medium, according to the procedures described, for example, in WO 2018/189090, in WO 2018/189091 and WO 2018/189092.

In one embodiment of the invention, polymer (A) is advantageously obtained by emulsion polymerization by a method being performed in the absence of any fluorosurfactant, for example according to the procedure described in WO 2019/076901.

As used herein, the terms "melting point", "melt temperature", and "melting temperature" are meant to define the peak of the melt endotherm as determined from a differential scanning calorimetry (hereinafter, also referred to as DSC). Where the DSC curve shows a plurality of melting peaks (endothermic peaks), the plurality of melting temperatures (Tm) is determined.

The amount of polymer (A) which may be used in step B) of the process of the invention is subject to various factors. One such factor is the surface area and amount of the active material, and the surface area and amount of any electroconductivity-imparting additive which are added to the electrode-forming composition. These factors are believed to be important because the binder particles provide bridges between the conductor particles and conductive material particles, keeping them in contact.

For the purpose of the present invention, the term "electrode active material" is intended to denote a compound that is able to incorporate or insert into its structure, and substantially release therefrom, alkaline or alkaline-earth metal ions during the charging phase and the discharging phase of an electrochemical cell. The electrode active material is preferably able to incorporate or insert and release lithium ions.

The nature of the electrode active material in the electrode-forming composition (C) depends on whether said composition is used in the manufacture of a negative electrode (anode) or a positive electrode (cathode).

In the case of forming a positive electrode for a Lithium-ion secondary battery, the electrode active material (AM) may comprise a composite metal chalcogenide of formula LiMQ₂, wherein M is at least one metal selected from transition metals such as Co, Ni, Fe, Mn, Cr and V and Q is a chalcogen such as O or S. Among these, it is preferred to use a lithium-based composite metal oxide of formula LiMO₂, wherein M is the same as defined above. Preferred examples thereof may include LiCoO₂, LiNiO₂, LiNiₓCo₁₋ₓO₂ (0 < x < 1) and spinel-structured LiMn₂O₄.

As an alternative, still in the case of forming a positive electrode for a Lithium-ion secondary battery, the electrode active material (AM) may comprise a lithiated or partially lithiated transition metal oxyanion-based electro-active material of formula M₁M₂(JO₄)_{f}E_{1-f}, wherein M₁ is lithium, which may be partially substituted by another alkali metal representing less than 20% of the M₁ metals, M₂ is a transition metal at the oxidation level of +2 selected from Fe, Mn, Ni or mixtures thereof, which may be partially substituted by one or more additional metals at oxidation levels between +1 and +5 and representing less than 35% of the M₂ metals, including 0, JO₄ is any oxyanion wherein J is either P, S, V, Si, Nb, Mo or a combination thereof, E is a fluoride, hydroxide or chloride anion, f is the molar fraction of the JO₄ oxyanion, generally comprised between 0.75 and 1.

The M₁M₂(JO₄)_{f}E_{1-f} electro-active material as defined above is preferably phosphate-based and may have an ordered or modified olivine structure.

More preferably, the electrode active material (AM) in the case of forming a positive electrode has formula Li₃₋ₓM'_{y}M"_{2-y}(JO₄)₃ wherein 0≤x≤3, 0≤y≤2, M' and M" are the same or different metals, at least one of which being a transition metal, JO₄ is preferably PO₄ which may be partially substituted with another oxyanion, wherein J is either S, V, Si, Nb, Mo or a combination thereof. Still more preferably, the electrode active material is a phosphate-based electro-active material of formula Li(FeₓMn₁₋ₓ)PO₄ wherein 0≤x≤1, wherein x is preferably 1 (that is to say, lithium iron phosphate of formula LiFePO₄).

In the case of forming a negative electrode for a Lithium-ion secondary battery, the electrode active material (AM) may preferably comprise one or more carbon-based materials and/or one or more silicon-based materials.

In some embodiments, the carbon-based materials may be selected from graphite, such as natural or artificial graphite, graphene, or carbon black.

These materials may be used alone or as a mixture of two or more thereof.

The carbon-based material is preferably graphite.

The silicon-based compound may be one or more selected from the group consisting of chlorosilane, alkoxysilane, aminosilane, fluoroalkylsilane, silicon, silicon chloride, silicon carbide and silicon oxide.

More particularly, the silicon-based compound may be silicon oxide or silicon carbide.

When present in the electrode active material, the silicon-based compounds are comprised in an amount ranging from 1 to 60 % by weight, preferably from 5 to 30 % by weight with respect to the total weight of the electro active compounds.

One or more optional electroconductivity-imparting additives may be added in order to improve the conductivity of a resulting electrode made from the composition of the present invention. Conducting agents for batteries are known in the art.

Examples thereof may include: carbonaceous materials, such as carbon black, graphite fine powder, carbon nanotubes, graphene, or fiber, or fine powder or fibers of metals such as nickel or aluminum. The optional conductive agent is preferably carbon black. Carbon black is available, for example, under the brand names, Super P^{®} or Ketjenblack^{®}.

When present, the conductive agent is different from the carbon-based material described above.

The amount of optional conductive agent is preferably from 0 to 30 wt. % of the total solids in the electrode forming composition. In particular, for cathode forming compositions the optional conductive agent is typically from 0 wt. % to 10 wt. %, more preferably from 0 wt. % to 5 wt. % of the total amount of the solids within the composition.

For anode forming compositions which are free from silicon based electro active compounds the optional conductive agent is typically from 0 wt. % to 5 wt. %, more preferably from 0 wt. % to 2 wt.% of the total amount of the solids within the composition, while for anode forming compositions comprising silicon based electro active compounds it has been found to be beneficial to introduce a larger amount of optional conductive agent, typically from 0.5 to 30 wt. % of the total amount of the solids within the composition.

In step B), mixing electrode active material (AM), the polymer (A) as above defined, and optionally, at least one conductive agent is performed by dry-blending these ingredients without the addition of any solvents, liquids, processing aids, or the like to the particle mixture. Dry-blending may be carried out, for example, in a mill, mixer or blender (such as a V-blender equipped with a high intensity mixing bar), until a uniform dry mixture is formed. The resulting material may be calendared many times to produce a conductive film of desired thickness and density. Those skilled in the art will identify, after perusal of this document, that blending time can vary based on batch size, materials, particle size, densities, as well as other properties, and yet remain within the scope hereof.

In step C) of the process of the invention, the powdered dry mixture obtained in step B) is subjected to mechanical compaction step to provide a self-supporting dry film.

The compacting of the dry mixture obtained in step B) can take place as a mechanical compaction, for example by means of a roller compactor or a tablet press, but it can also take place as rolling, build-up or by any other technique suitable for this purpose.

The mechanical compaction step may be associated to a thermal consolidation step. The combination of an applied pressure and a heat treatment makes thermal consolidation possible at lower temperatures than if it were done alone.

In one embodiment, the mechanical compaction step is carried out by compression, suitably by compressing the dry mixture obtained in step B) between two metal foils.

The compaction step can be carried out at a temperature lower than the highest melting temperature of the polymer (A).

The compaction step is conveniently carried out at a temperature not exceeding 200 °C, preferably at a temperature lower than 180 °C.

In step D), the dry film obtained in step C) is applied onto an electrically conductive substrate to form the electrode.

The sheet of substrate material may comprise a metal foil, an aluminum foil in particular.

Thanks to the improved adhesion of the polymer (A), the dry film obtained in step C) can be applied onto the electrically conductive substrate without the need for any primer or adhesive layer.

The electrode (E) of the invention is particularly suitable for use in electrochemical devices, in particular in secondary batteries.

In one aspect, the present invention provides an electrochemical device being a secondary battery comprising:
- a positive electrode and a negative electrode,
wherein at least one of the positive electrode and the negative electrode is the electrode (E) according to the present invention.

Preferably, the electrochemical device is a secondary battery comprising:
- a positive electrode and a negative electrode,
wherein the positive electrode is the electrode (E) according to the present invention.

The secondary battery of the invention is preferably an alkaline or an alkaline-earth secondary battery.

The secondary battery of the invention is more preferably a lithium-ion secondary battery.

An electrochemical device according to the present invention can be prepared by standard methods known to a person skilled in the art.

Should the disclosure of any patents, patent applications, and publications which are incorporated herein by reference conflict with the description of the present application to the extent that it may render a term unclear, the present description shall take precedence.

The invention will be now described with reference to the following examples, whose purpose is merely illustrative and not intended to limit scope of the invention.

### EXAMPLES

### RAW MATERIALS

PTFE: PTFE homopolymer powder having specific gravity, measured according to ASTM D792, of 2160 and having rheometric pressure, measured according to ASTM D4895, of 9.50 MPa.;
Lithium Iron Phosphate, LFP, available as Life Power from Johnson Matthey;
Carbon black, available as SC65 available from Imerys S.A.;
Galden HT80 available from Solvay Materials.

### Polymer (A-1)

In a 2.2 liters AISI 316 steel vertical autoclave equipped with baffles, and stirrer working at 600 rpm, 1.25 I of demineralized water were introduced. Then the temperature was brought to a reaction temperature of 80 °C; once this reached, VDF to increase the pressure up to 19.5 Bars, 50 g of a solution of c-C₆O₄ ammonium salt dissolved into demineralized water in a concentration of 35% were introduced. Next, pure gas mixture of VDF 20% and TFE 80% in molar amount, was added via a compressor, until reaching a pressure of 20 abs Bars. Then, 20 ml of solution of Ammonium persulfate (APS) in demineralized water at a concentration of 3% by weight were fed. The polymerization pressure was maintained constant by feeding the above mentioned mixture; when 150 g of the gas were fed the reactor was cooled at room temperature and then stripped, the polymer was discharged in latex form.

### Polymer (A-2)

Same procedure as in example Polymer (A-1) was followed, but:
- stirrer working at 650 Rpm,
- TFE amount to generate a pressure variation of 3.5 Bars,
- pressurization of the reactor with pure VDF in order to reach polymerization pressure of 20 Bars,
- 20 g of a solution of c-C₆O₄ ammonium salt dissolved into demineralized water in a concentration of 35%,
- 30 ml of solution of Ammonium persulfate (APS) in demineralized water at a concentration of 3% in weight,
- once started the reaction, the pressure was left to go down to 5 abs Bars,
- once reached this pressure, the reactor was re-pressurized with a mixture of TFE 80% and VDF 20% by molar amount, the above mentioned mixture was then fed in 50 g amount.

### Polymer (A-3)

Same procedure as in example Polymer (A-1) was followed, but:
- stirrer at 650 rpm,
- introducing VDF to generate a pressure variation of 7.8 bars,
- 20 g of a solution of c-C₆O₄ ammonium salt dissolved into demineralized water in a concentration of 35%,
- 30 ml of solution of Ammonium persulfate (APS) in demineralized water at a concentration of 3% by weight.

Next, gaseous mixture of VDF/TFE with molar ratio of 75%/25% was added via a compressor, until reaching a pressure of 20 abs Bars. Once the polymerization was started, 250 g of the above mentioned mixture, then the gas mixture is switched to pure TFE, 250 g of pure TFE were fed in the reactor.

### Polymer (A-4)

Same procedure as in example Polymer (A-3) was followed, but no solution of c-C₆O₄ ammonium salt was fed in the reactor.

### Polymer (C-1) - Comparative

Same procedure as in the example Polymer (A-1) was followed, but: - introducing 1.4 liters of demineralized water,
- 650 rpm of stirring,
- introducing VDF to generate a pressure variation of 8 Bars,
- 30 g of a solution of c-C₆O₄ ammonium salt dissolved into demineralized water in a concentration of 35%,
- pressurized at working pressure of 20 abs Bars by introducing a gas mixture of TFE 80% and VDF 20% by molar amount,
- 500 g of the above mentioned gas mixture.

### Polymer (C-2) - Comparative

Same procedure as in the example Polymer (C-1) was followed, but:
- using 5 liters reactor,
- introducing 3.5 liters of demineralized water,
- 650 rpm of stirring,
- working temperature of 65 °C,
- introducing VDF to generate a pressure variation of 10 bars,
- 50 g of a solution of c-C₆O₄ ammonium salt dissolved into demineralized water in a concentration of 35%,
- 35 ml of solution of Ammonium persulfate (APS) in demineralized water at a concentration of 3% in weight,
- pressurized at working pressure of 20 abs Bars by introducing a gas mixture of TFE 80% and VDF 20% by molar amount,
- 500 g of the above mentioned gas mixture.

### Polymer post treatment

The polymers (A-1), (A-2), (A-3), (A-4), (C-1) and (C-2) in powder form were obtained from the corresponding latex by cryogenic coagulation or by electrolytic coagulation using:
- aluminum sulphate (Al₂(SO₄)₃) at concentration of 2 g/l calculated on amount of water in the coagulation vessel,
- ammonium carbonate ((NH₄)₂CO₃) at concentration of 8 g/l calculated on amount of water in the coagulation vessel, or
- nitric acid (HNO₃), 25 ml of a solution at 65% calculated on amount of water in the coagulation vessel.

After the coagulation occurred, each polymer was washed at room temperature with demineralized water. After coagulation and washing, the obtained powders were then dried 24 hours in a vented oven at a temperature of at least 80°C and less than 120°C.

Melting temperatures and enthalpy of fusion (ΔH) of polymers (A-1) to (A-4), (C-1) and (C-2), characterized by DSC according to ASTM D3418 standard, are reported in Table 1.

**Table1**

| **Polymer** | **Tm-L (°C)** | **ΔH-L (J/g)** | **Tm-A (°C)** | **ΔH-A (J/g)** | **Tm-H (°C)** | **ΔH-H (J/g)** |
|---|---|---|---|---|---|---|
| A-1 | 139.3 | 1.2 | 177.3 | 0.45 | 273.5 | 8.60 |
| A-2 | 150.8 | 14.8 | 283.1 | 2.8 | 322.8 | 1.2 |
| A-3 | 132.1 | 12.6 | - | - | 321.4 | 16.3 |
| A-4 | 140.1 | 14.3 | - | - | 325.0 | 23.1 |
| C-1 | - | - | - | - | 282.2 | 23.1 |
| C-2 | | | | | 327 | 59.9 |

### Lamination with Metal substrate

Films of comprising any of the polymers (A-1) to (A-4), (C-1) and (C-2) polymer were obtained by compressing the powder compositions between two aluminum foils. Lamination process occurred at a temperature lower than 180°C and at a pressure of 160 Bars. The material was kept in a heating for 6 minutes than was pressed at the operative pressure running 6 degassing steps (manually by releasing the pressure) for a total of 180 seconds. The samples were then cooled at room temperature by a cold press. The samples were kept in a cooling press at the same pressure as for the first step for a time period comprised between 4 to 6 minutes.

### Adhesion assessment and measure

Adhesion assessment and measurements were carried out between the film obtained as above specified and the aluminum foil by following ASTM D 1876 on the 3 layer structure obtained after the lamination (metal foil/ film/metal foil). The adhesion values are reported in Table 2.

**Table 2**

| **polymer** | **Temperature of adhesion test** | **Peeling streght (N/Cm)** | **Max load (N)** |
|---|---|---|---|
| (A-1) | 180°C | 0.6 ± 0.1 | 1.6 ± 0.4 |
| (A-2) | 180°C | 0.3 ± 0.1 | 1.1 ± 0.4 |
| (A-3) | 180°C | 0.3 ± 0.1 | 1.3 ± 0.2 |
| (C-1) | 180°C | No adhesion | |
| (C-2) | 180°C | No adhesion | |

No adhesion was observed with PTFE when used in the same conditions.

### Processability

Processability of the materials was verified using Capillary Rheometer (Goettefert Rheograph 2003) employing a Die (L/D 10, diameter 1mm, run in angle 20°) with shear rate of 10 s-1 and 100 s-1 and temperature of 180°C, obtaining extrudates of the blends.

The Applicant has surprisingly found that the polymer (A) can be suitably processed at a temperature well below its higher melting point, thus allowing to obtain extrudates of the binder by a convenient process.

### Example 1: electrode preparation with polymer (A-4)

A dry mixture of 1.8 g of LFP and 0.1 g of SC65 was prepared by grinding for 2 minutes the two powders in a ceramic mortar with a pestle.

1 ml of Galden was added to the powder mixture and the composite mixed in a Vortex mixer at 20000 rpm for 0.5 minutes. A homogeneous paste was obtained.

0.1 g of polymer (A-4) was added to the homogeneous paste and the mixture mixed in a Vortex mixer at 16000 rpm for 0.5minutes. A homogeneous composite was obtained.

The composite was then mixed for additional 5 minutes in a ceramic mortar with a pestle to fibrillate the polymer.

0.6 g of the composite was finally pressed in a flat press at 24 ton for 5minutes to obtain a tablet with diameter 20 mm and thickness 0.9 mm.

The procedure was repeated to prepare three tablets.

The tablets were dried in a vacuum oven (Buchi) at 90°C for 2 h under vacuum to obtain the electrode composition.

The resulting positive electrode had the following composition: 90 wt.% of LFP, 5 wt.% of polymer (A-4) and 5 wt. % of carbon black. **Electrode EC1** was thus obtained.

### Example 2 - PTFE

A dry mixture of 1.8 g of LFP and 0.1 g of SC65 was prepared by grinding for 2 minutes the two powders in a ceramic mortar with a pestle.

1 ml of Galden was added to the powder mixture and the composite mixed in a Vortex mixer at 20000 rpm for 0.5 minutes. A homogeneous paste was obtained.

0.1 g of PTFE was added to the homogeneous paste and the mixture mixed in a Vortex mixer at 16000 rpm for 0.5 minutes. A homogeneous composite was obtained.

The composite was then mixed for additional 5 minutes in a ceramic mortar with a pestle to fibrillate the polymer.

0.6 g of the composite was finally pressed in a flat press at 24 ton for 5 minutes to obtain a tablet with diameter 20 mm and thickness 0.95 mm.

The procedure was repeated to prepare three tablets.

The tablets were dried in a vacuum oven (Buchi) at 90°C for 2 h under vacuum to obtain the electrode composition.

The resulting positive electrode had the following composition: 90 wt.% of LFP, 5 wt.% of PTFE and 5 wt. % of carbon black. **Electrode CE1** was thus obtained.

### Electrical resistance measurement

The electrical resistance measure of EC1 and CE1 were done in an EICel between two stainless steel plates (18 mm diameter) by applying a perturbation of 10 mV rms at frequency from 1 Hz to 200 kHz recording 10 points per decade. The result of electrical resistance was taken from the intercept with the x-axis of the complex impedance spectra. The mean resistances of the 2 samples, calculated as mean value of measures repeated in triple, are reported in Table 3. Values are similar for all compositions.

**Table 3**

| | **Electrical resistance (Ω/mm)** |
|---|---|
| **CE1** | **14,5081** |
| **EC1** | **12,8** |

The data show that the binders of the present invention have improved adhesion to current collectors, while at the same time they keep good electric properties, so that they can be suitably used as binders for electrodes.

## Claims

1. A binder composition [binder (B)] for use in the preparation of electrodes for electrochemical devices, **characterized by** comprising a VDF-based copolymer [polymer (A)] that comprises:
- recurring units derived from vinylidene fluoride (VDF), and
- recurring units derived from tetrafluoroethylene (TFE),
wherein polymer (A) has at least two melting points, one melting point lower than 220 °C and one melting point higher than 250 °C, determined as described in the description.

2. The binder (B) according to claim 1 wherein polymer (A) has one melting point of less than 180 °C and one melting point higher than 300 °C.

3. The binder (B) according to anyone of the preceding claims, wherein polymer (A) further contains at least one other monomer selected from the group consisting of: ethylene, propylene, isobutylene, fluorinated comonomers such as chlorotrifluoroethylene (CTFE), hexafluoropropylene (HFP), fluorodioxoles, fluorodioxalanes, perfluoroalkyl ethylene monomers (e.g. perfluorobutylethylene (PFBE), perfluorohexylethylene (PFHE) and perfluorooctylethylene (PFOE)), and a perfluoroalkyl vinyl ether monomer (e.g., perfluoro(methyl vinyl ether) (PMVE), perfluoro(ethyl vinyl ether) (PEVE), and perfluoro(propyl vinyl ether) (PPVE)).

4. An electrode-forming composition [composition (C)] for use in the preparation of electrodes for electrochemical devices, **characterized by** comprising:
a) at least one electrode active material (AM);
b) a binder (B) according to anyone of claims 1 to 3; and
c) optionally, at least one conductive agent.

5. A process for manufacturing an electrode [electrode (E)] for electrochemical cell, said process comprising:
- A) providing a VDF-based copolymer [polymer (A)] according to anyone of claims 1 to 3;
- B) dry mixing the at least one electrode active material (AM), the polymer (A) as above defined, and optionally, at least one conductive agent in the absence of solvent to provide a dry electrode forming composition [composition (C)];
- C) feeding the composition (C) obtained in step B) to a compactor to form a self-supporting dry film; and
- D) applying the dry film to an electrically conductive substrate to form the electrode.

6. The process according to claim 5, wherein in step B) the dry mixing carried out, for example, in a mill, mixer or blender until a uniform dry mixture is formed.

7. The process according to claim 5, wherein step C) is carried out at a temperature not exceeding 200 °C, preferably at a temperature lower than 180 °C.

8. An electrode (E) for a secondary battery obtainable by the process according to anyone of claims 5 to 7.

9. An electrochemical device, such as a secondary battery or a capacitor, comprising at least one electrode (E) according to claim 8.

10. The electrochemical device according to claim 9, said electrochemical device being a secondary battery comprising:
- a positive electrode and a negative electrode,
wherein at least one of the positive electrode and the negative electrode is the electrode (E) according to claim 8.

11. The electrochemical device according to claim 11, said electrochemical device being a secondary battery comprising:
- a positive electrode and a negative electrode,
wherein the positive electrode is the electrode (E) according to claim 8.

## Patentansprüche

1. Bindemittelzusammensetzung [Bindemittel (B)] zur Verwendung bei der Herstellung von Elektroden für elektrochemische Vorrichtungen, **dadurch gekennzeichnet, dass** sie ein auf VDF basierendes Copolymer [Polymer (A)] umfasst, das Folgendes umfasst:
- Wiederholungseinheiten, die sich von Vinylidenfluorid (VDF) ableiten, und
- Wiederholungseinheiten, die sich von Tetrafluorethylen (TFE) ableiten,
wobei Polymer (A) mindestens zwei Schmelzpunkte aufweist, einen Schmelzpunkt unter 220 °C und einen Schmelzpunkt über 250 °C, bestimmt wie in der Beschreibung beschrieben.

2. Bindemittel (B) nach Anspruch 1, wobei Polymer (A) einen Schmelzpunkt unter 180 °C und einen Schmelzpunkt über 300 °C aufweist.

3. Bindemittel (B) nach einem der vorhergehenden Ansprüche, wobei Polymer (A) ferner mindestens ein anderes Monomer enthält, das aus der Gruppe bestehend aus: Ethylen, Propylen, Isobutylen, fluorierten Comonomeren wie Chlortrifluorethylen (CTFE), Hexafluorpropylen (HFP), Fluordioxolen, Fluordioxalanen, Perfluoralkylethylen-Monomeren (z. B. Perfluorbutylethylen (PFBE), Perfluorhexylethylen (PFHE) und Perfluoroctylethylen (PFOE)), und einem Perfluoralkylvinylether-Monomer (z. B. Perfluor(methylvinylether) (PMVE), Perfluor(ethylvinylether) (PEVE) und Perfluor(propylvinylether) (PPVE)) ausgewählt ist.

4. Elektrodenbildende Zusammensetzung [Zusammensetzung (C)] zur Verwendung bei der Herstellung von Elektroden für elektrochemische Vorrichtungen, **dadurch gekennzeichnet, dass** sie Folgendes umfasst:
a) mindestens ein Elektrodenaktivmaterial (AM);
b) ein Bindemittel (B) nach einem der Ansprüche 1 bis 3; und
c) gegebenenfalls mindestens ein leitendes Mittel.

5. Verfahren zur Herstellung einer Elektrode [Elektrode (E)] für eine elektrochemische Zelle, wobei das Verfahren Folgendes umfasst:
- A) Bereitstellen eines auf VDF basierenden Copolymers [Polymer (A)] nach einem der Ansprüche 1 bis 3;
- B) Trockenmischen des mindestens einen Elektrodenaktivmaterials (AM), des Polymers (A) gemäß obiger Definition und gegebenenfalls mindestens eines leitenden Mittels in Abwesenheit von Lösungsmittel zur Bereitstellung einer trockenen elektrodenbildenden Zusammensetzung [Zusammensetzung (C)];
- C) Eintragen der in Schritt B) erhaltenen Zusammensetzung (C) in einen Kompaktor zur Bildung eines selbsttragenden trockenen Films; und
- D) Aufbringen des trockenen Films auf ein elektrisch leitendes Substrat zur Bildung der Elektrode.

6. Verfahren nach Anspruch 5, wobei in Schritt B) das Trockenmischen beispielsweise in einer Mühle, einem Mischer oder einem Blender durchgeführt wird, bis sich eine einheitliche trockene Mischung ergibt.

7. Verfahren nach Anspruch 5, wobei Schritt C) bei einer Temperatur von nicht mehr als 200 °C, vorzugsweise bei einer Temperatur unter 180 °C, durchgeführt wird.

8. Elektrode (E) für eine Sekundärbatterie, erhältlich durch das Verfahren nach einem der Ansprüche 5 bis 7.

9. Elektrochemische Vorrichtung, wie eine Sekundärbatterie oder ein Kondensator, umfassend mindestens eine Elektrode (E) nach Anspruch 8.

10. Elektrochemische Vorrichtung nach Anspruch 9, wobei es sich bei der elektrochemischen Vorrichtung um eine Sekundärbatterie handelt, die Folgendes umfasst:
- eine positive Elektrode und eine negative Elektrode, wobei es sich bei der positiven Elektrode und/oder der negativen Elektrode um die Elektrode (E) nach Anspruch 8 handelt.

11. Elektrochemische Vorrichtung nach Anspruch 11, wobei es sich bei der elektrochemischen Vorrichtung um eine Sekundärbatterie handelt, die Folgendes umfasst:
- eine positive Elektrode und eine negative Elektrode, wobei es sich bei der positiven Elektrode um die Elektrode (E) nach Anspruch 8 handelt.

## Revendications

1. Composition de liant [liant (B)] pour une utilisation dans la préparation d'électrodes pour dispositifs électrochimiques, **caractérisée en ce qu'**elle comprend un copolymère à base de VDF [polymère (A)] qui comprend :
- des motifs répétitifs dérivés du fluorure de vinylidène (VDF), et
- des motifs répétitifs dérivés du tétrafluoroéthylène (TFE),
dans laquelle le polymère (A) présente au moins deux températures de fusion, une température de fusion inférieure à 220 °C et une température de fusion supérieure à 250 °C, déterminées comme décrit dans la description.

2. Liant (B) selon la revendication 1, dans lequel le polymère (A) a un point de fusion inférieur à 180 °C et un point de fusion supérieur à 300 °C.

3. Liant (B) selon l'une quelconque des revendications précédentes, dans lequel le polymère (A) contient en outre au moins un autre monomère choisi dans le groupe constitué par : éthylène, propylène, isobutylène, comonomères fluorés tels que chlorotrifluoroéthylène (CTFE), hexafluoropropylène (HFP), fluorodioxoles, fluorodioxalanes, monomères de perfluoroalkyléthylène (par exemple, perfluorobutyléthylène [PFBE], perfluorohexyléthylène [PFHE] et perfluorooctyléthylène [PFOE]), et un monomère de perfluoroalkylvinyléther (par exemple perfluoro(méthylvinyléther) [PMVE], perfluoro(éthylvinyléther) [PEVE], et perfluoro(propylvinyléther) [PPVE]).

4. Composition de formation d'électrode [composition (C)] pour une utilisation dans la préparation d'électrodes pour dispositifs électrochimiques, **caractérisée en ce qu'**elle comprend :
a) au moins un matériau actif d'électrode (AM) ;
b) un liant (B) selon l'une quelconque des revendications 1 à 3 ; et
c) éventuellement, au moins un agent conducteur.

5. Procédé pour la fabrication d'une électrode [électrode (E)] pour une cellule électrochimique, ledit procédé comprenant :
- A) fourniture d'un copolymère à base de VDF [polymère (A)] selon l'une quelconque des revendications 1 à 3 ;
- B) mélange à sec d'au moins un matériau actif d'électrode (AM), du polymère (A) tel que défini ci-dessus, et éventuellement d'au moins un agent conducteur en l'absence de solvant pour fournir une composition de formation d'électrode sèche [composition (C)] ;
- C) alimentation de la composition (C) obtenue à l'étape B) dans un compacteur pour former un film sec autoportant ; et
- D) application du film sec sur un substrat électriquement conducteur pour former l'électrode.

6. Procédé selon la revendication 5, dans lequel, dans l'étape B), le mélange à sec est effectué, par exemple, dans un broyeur, un mélangeur ou un mixeur jusqu'à ce qu'un mélange à sec uniforme soit formé.

7. Procédé selon la revendication 5, dans lequel l'étape C) est effectuée à une température ne dépassant pas 200 °C, de préférence à une température inférieure à 180 °C.

8. Électrode (E) pour une batterie secondaire pouvant être obtenue par le procédé selon l'une quelconque des revendications 5 à 7.

9. Dispositif électrochimique, tel qu'une batterie secondaire ou un condensateur, comprenant au moins une électrode (E) selon la revendication 8.

10. Dispositif électrochimique selon la revendication 9, ledit dispositif électrochimique étant une batterie secondaire comprenant :
- une électrode positive et une électrode négative, dans lequel au moins l'une parmi l'électrode positive et l'électrode négative est l'électrode (E) selon la revendication 8.

11. Dispositif électrochimique selon la revendication 11, ledit dispositif électrochimique étant une batterie secondaire comprenant :
- une électrode positive et une électrode négative, dans lequel l'électrode positive est l'électrode (E) selon la revendication 8.
